(19) Europäisches Patentamt

European Patent Office

Office européen des brevets

(11) **EP 0 693 669 B1**

(12) **EUROPÄISCHE PATENTSCHRIFT**

(45) Veröffentlichungstag und Bekanntmachung des Hinweises auf die Patenterteilung:
**01.08.2001 Patentblatt 2001/31**

(51) Int Cl.⁷: **G01B 7/012**, G01B 3/00

(21) Anmeldenummer: **95109498.6**

(22) Anmeldetag: **20.06.1995**

(54) **Tastkopf für Koordinatenmessgeräte**

Measuring head for coordinate measuring machines

Tête de mesure pour machines de mesure de coordonnées

(84) Benannte Vertragsstaaten:
**DE FR GB IT**

(30) Priorität: **09.07.1994 DE 4424225**

(43) Veröffentlichungstag der Anmeldung:
**24.01.1996 Patentblatt 1996/04**

(73) Patentinhaber:
• **Carl Zeiss**
**89518 Heidenheim (Brenz) (DE)**
Benannte Vertragsstaaten:
**DE FR IT**
• **Carl-Zeiss-Stiftung trading as Carl Zeiss**
**89518 Heidenheim (Brenz) (DE)**
Benannte Vertragsstaaten:
**GB**

(72) Erfinder:
• **Ruck, Otto**
**D-73479 Ellwangen-Pfahlheim (DE)**
• **Szenger, Franz**
**D-89551 Königsbronn (DE)**

(56) Entgegenhaltungen:
| | |
|---|---|
| EP-A- 0 569 694 | DD-A- 150 111 |
| DE-A- 3 210 711 | DE-A- 3 520 685 |
| DE-A- 3 740 657 | DE-A- 4 001 981 |

## Beschreibung

Die Erfindung betrifft einen Tastkopf für Koordinatenmeßgeräte mit Meßsystemen zur Messung der Auslenkung des nachgiebigen Teils des Tastkopfs und elektromagnetischen Kraftgeneratoren zur Erzeugung von Meßkräften vorgebbarer Größe und Richtung. Ein solcher Tastkopf ist beispielsweise in der DE-PS 22 42 355 beschrieben. Er gehört zur Gattung der sogenannten "messenden" Tastköpfe, die ein der Auslenkung des Taststiftträgers proportionales Signal abgeben, im Gegensatz zu sogenannten "schaltenden" Tastköpfen, die lediglich ein impulsförmiges Signal zum Zeitpunkt der Berührung mit dem Werkstück erzeugen.

Die Meßkraftgeneratoren des bekannten Tastkopfes sind Tauchspulensysteme, die im oberen Teil des Tastkopfs angeordnet sind, damit die beim Betrieb auftretende Abwärme möglichst von den nach Art eines Federparallelogramms angeordneten Führungen ferngehalten ist, an denen der nachgiebige Taststiftträger aufgehängt ist. Zur Übertragung der von den Tauchspulen ausgeübten Kräfte auf die den einzelnen Koordinatenrichtungen zugeordneten Federparallelogrammen dient ein Gestänge, wodurch die Kraftübertragung indirekt und "weich" wird. Die Federparallelogramme können auch in den einzelnen Koordinatenrichtungen geklemmt werden und zwar durch mechanische Rasten, über die die Auslenkbewegung der Federparallelogramme in ihrem elektrischen bzw. mechanischen Nullpunkt gefesselt wird.

Bei diesem Tastkopf ist es schwierig, die Meßkräfte und die Klemmung in anderen als den durch die Federparallelogramme mechanisch vorgegebenen Richtungen gezielt einzustellen.

In der DE-PS 32 10 711 ist ein weiterer Tastkopf vom "messenden" Typ beschrieben. Bei diesem Tastkopf sind die Meßkraftgeneratoren direkt an den ebenfalls als Federparallelogramme ausgebildeten Führungen für die verschiedenen Auslenkrichtungen angeordnet. Dem Tastkopf ist eine Elektronik zugeordnet, über die die resultierende Richtung des Kraftvektors entsprechend vorgegebenen Sollwerten beliebig eingestellt werden kann. Den einzelnen Führungsrichtungen sind außerdem passive Dämpfungselemente zugeordnet, die verhindern, daß der nachgiebige Taststift unkontrolliert um seinen Nullage oszilliert. Eine Möglichkeit zur Klemmung des nachgiebigen Taststiftträgers in einzelnen Koordinatenrichtungen bietet dieser bekannte Tastkopf jedoch nicht.

Aus der EP 0 569 694 A2 ist ein Tastkopf bekannt, der elektronisch geklemmt werden kann, indem die Antriebe im Tastkopf bei Tasterauslenkungen mit hohen Rückstellkräften beaufschlagt werden. Der Aufbau des Tastkopfes ist jedoch nicht näher beschrieben.

Aus der DE 40 01 981 A1 ist es bekannt, die Schwingungen des Querarms eines Ständermeßgerätes durch eine tastkopfseitige Zusatzmasse zu dämpfen und zwar entweder unter Verwendung einer viskosen Flüssigkeit, in der sich die Zusatzmasse bewegt, oder aktiv mit Hilfe eines Antriebs für die Zusatzmasse und einer Regeleinrichtung, die den Antrieb abhängig von den Signalen eines Schwingungssensors betreibt. Hierdurch wird jedoch allenfalls der Tastkopf insgesamt in Ruhe gehalten, nicht jedoch die Relativbewegung zwischen dem nachgiebig gelagerten Taststifts und dem gehäusefesten Teil des Tastkopfes gedämpft.

Zudem besitzen die eingangs genannten Tastköpfe alle einen relativ komplizierten und damit aufwendigen und teueren mechanischen Aufbau, unter anderem weil für die Klemmung und Dämpfung separate zusätzliche Baugruppen verwendet sind, die darüber hinaus, was die Einstellung der Klemmkräfte und Dämpfungscharakteristiken betrifft, wenig flexibel sind und nur schwer an unterschiedliche Betriebsbedingungen bzw. Meßaufgaben angepaßt werden können.

Das Deutsche Wirtschaftspatent DD 150 111 zeigt einen in einer Koordinatenrichtung messenden Tastkopf mit einer Tauchspule als Kraftgenerator. Die Tauchspule kann von entsprechenden Reglern derart mit Strömen beaufschlagt werden, daß sie als Kraftgenerator, oder als Dämpfer, oder zur Klemmung des Taststiftes verwendet werden kann. Es ist die Aufgabe der vorliegenden Erfindung einen Tastkopf vom messenden Typ zu schaffen, der sowohl eine Einrichtung zur Klemmung als auch zur Dämpfung der Bewegung des nachgiebigen Taststiftträgers enthält, und der bei möglichst einfachem Aufbau variabel einsetzbar ist.

Diese Aufgabe wird durch eine Ausbildung des Tastkopfes gemäß den im Anspruch 1 angegebenen Merkmalen gelöst.

Bei dem erfindungsgemäßen Tastkopf arbeiten die Kraftgeneratoren, die Klemmeinrichtung und die Dämpfungseinrichtung d.h. alle drei Funktionsbaugruppen auf elektromagnetischem Wege und es ist deshalb möglich, alle diese Funktionen in den Kraftgeneratoren bzw. in der zu ihrer Ansteuerung verwendeten Elektronik zusammenzufassen. Beispielsweise ist es möglich, die Dämpfungseinrichtung nach dem Wirbelstrom-Prinzip aufzubauen, indem der Spulenkörper der für die Kraftgeneratoren verwendeten Tauchspulen aus Metall, beispielsweise aus Kupfer gefertigt wird.

Die metallische Ausführung des Spulenkörpers bietet außerdem die Möglichkeit, die Tauchspulen effektiv zu kühlen, wodurch es möglich wird, die Kraftgeneratoren direkt an den Führungen für die verschiedenen Auslenkrichtungen des Tastkopfes anzuordnen, weil das Problem der Abwärme dann nicht mehr auftritt. Andererseits wird durch den direkten Antrieb der Führungen im Tastkopf letzterer sehr steif, was die Dynamik des Tastkopfes erhöht, d.h. der Taststift kann im scannenden Betrieb der Werkstückoberfläche besser folgen und zwar auch bei hohen Abtastgeschwindigkeiten.

Ebenso ist es möglich, die Dämpfung des nachgiebigen Teils bzw. Taststiftträgers elektronisch durch eine Regelschaltung zu realisieren, die ein der Geschwindigkeit der Auslenkung des nachgiebigen Teils proportionales jedoch der Auslenkrichtung entgegengerichtetes Signal auf die Kraftgeneratoren aufschaltet. Bei dieser Art der Dämpfung werden praktisch keine zusätzlichen Bauelemente benötigt, vielmehr können die für die Meßkraftaufschaltung erforderlichen Kraftgeneratoren bzw. Tauchspulen und die zu ihrer Ansteuerung mit der vorgewählten Meßkraft ohnehin erforderliche Elektronik mitverwendet werden. Diese Lösung ist außerdem äußerst flexibel, da dann die Dämpfungscharakteristik prozessorgesteuert einstellbar ist, so daß beipielsweise dann, wenn die Maschine im Eilgang fährt, die Dämpfungskonstante erhöht wird, während beim eigentlichen Messen am Werkstück die Dämpfungskonstante reduziert wird.

In gleicher Weise läßt sich der nachgiebige Teil des Tastkopfes in beliebigen Richtungen elektronisch klemmen, indem die Meßkraftgeneratoren bzw. Tauchspulen durch eine elektrische Regelschaltung mit entsprechend hoher Regelverstärkung ebenfalls beispielsweise durch einen Mikroprozessor gesteuert einstellbar sind.

Abgeleitet werden können die für die Klemmung und Dämpfung erforderlichen Signale von den ohnehin im Tastkopf vorhandenen Meßsystemen, die das der Auslenkung des nachgiebigen Teils in der jeweiligen Koordinatenrichtung proportionale Tastsignal liefern, so daß auch insofern keine weiteren Sensoren erforderlich sind.

Weitere Vorteile der Erfindung ergeben sich aus der nachfolgenden Beschreibung von Ausführungsbeispielen anhand der Figuren der beigefügten Zeichnungen.

Figur 1 ist eine perspektivische Prinzipsskizze, die den mechanischen Aufbau des Tastkopfs zeigt;

Figur 2 zeigt eine der Führungen des Tastkopfs aus Figur 1 mit dem ihr zugeordneten Kraftgenerator im Schnitt entlang der Symmetrieachse des Kraftgenerators;

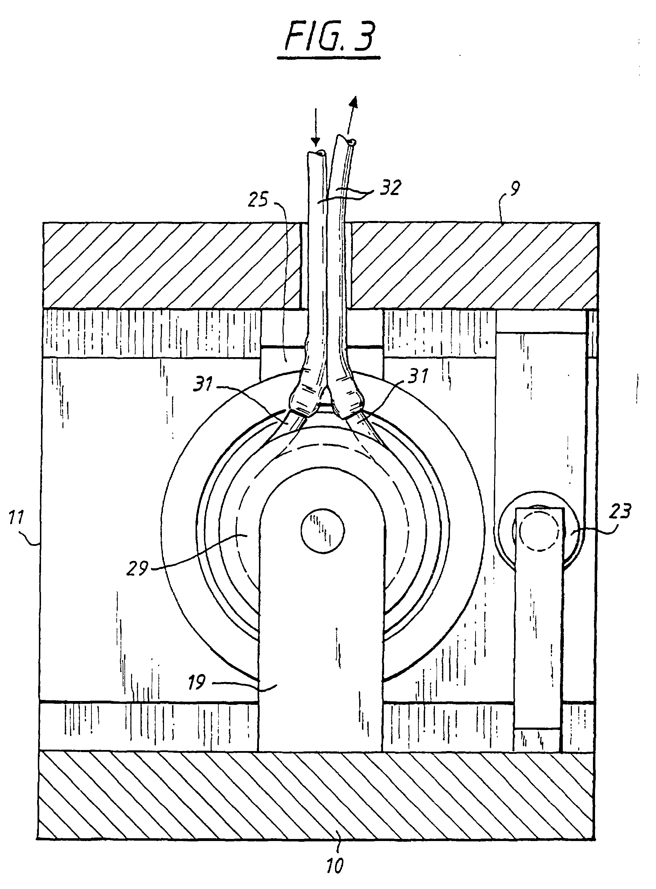

Figur 3 ist eine Ansicht des Kraftgenerators aus Figur 2 entsprechend der Linie III in Figur 2;

Figur 4 ist ein vereinfachtes Blockschaltbild der zur Ansteuerung der Kraftgeneratoren verwendeten Elektronik;

Figur 5 ist eine detailliertere Schaltskizze der Elektronik aus Figur 4.

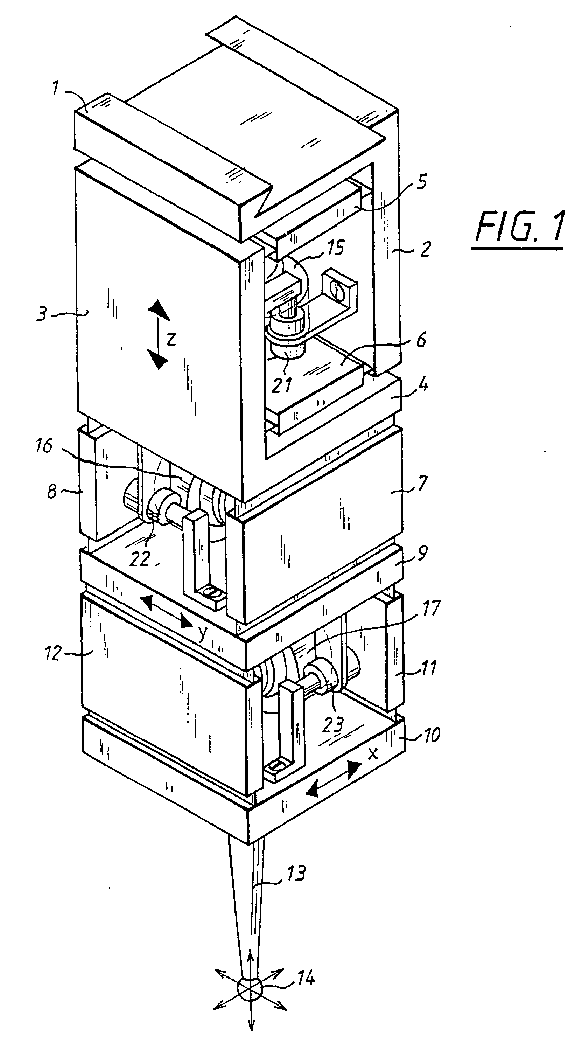

Der in Figur 1 dargestellte Tastkopf besitzt ein gehäusefestes Teil in Form eines Winkels, dessen oberer waagerechter Schenkel (1) eine Aufnahmeschwalbe zur Befestigung des Tastkopfs an der Pinole des nicht näher dargestellten Koordinatenmeßgerätes aufweist. Mit dem vertikalen Schenkel (2) des gehäusefesten Teils ist über ein Paar beabstandete und in der Mitte verstärkte Federbleche (5) und (6) der vertikale Teil (3) eines weiteren L-förmigen Winkels verbunden. Die hieraus resultierende Parallelogrammführung bildet die z-Führung des Tastkopfes.

Am waagerechten Teil (4) des in z beweglichen Winkels ist über ein zweites Paar verstärkter Federbleche (7) und (8) eine Platte (9) beweglich aufgehängt, die die y-Führung des Tastkopfes bildet. An dieser wiederum hängt ein um 90° gegenüber den Federblechen (7) und (8) gedrehtes drittes Paar Federbleche (11) und (12), das die Platte (9) mit einer weiteren Platte (10) verbindet, welche die x-Führung des Tastkopfs darstellt. Die Platte (10) trägt den Taststift (13) mit der Tastkugel (14).

Jede der drei Parallelogrammführungen ist mit einem Meßkraftgenerator nach Art eines Tauchspulenantriebes versehen. Hierzu ist am feststehenden Teil (2) der erste Magnet (15), an der Unterseite des Schenkels (4) der zweite Magnet (16) und an der Platte (9) der dritte Magnet (17) des betreffenden Tauchspulenantriebs befestigt, während die beweglichen Teile, d.h. die Spulenkörper der Tauchspulenantriebe mit den auslenkbaren Teilen (3,9 und 10) der z, y und x-Führung verbunden sind.

Ebenfalls dargestellt sind die drei Meßsysteme (21,22 und 23), mit denen die Auslenkung der geführten Teile des Tastkopfes in den drei genannten Koordinatenrichtungen laufend ermittelt wird. Hierbei handelt es sich um sogenannte LVDT-Systeme, das sind im wesentlichen bei einer Trägerfrequenz betriebene Induktionsspulen, die ein der Stellung des darin verschiebbaren Kerns proportionales Wegsignal abgeben.

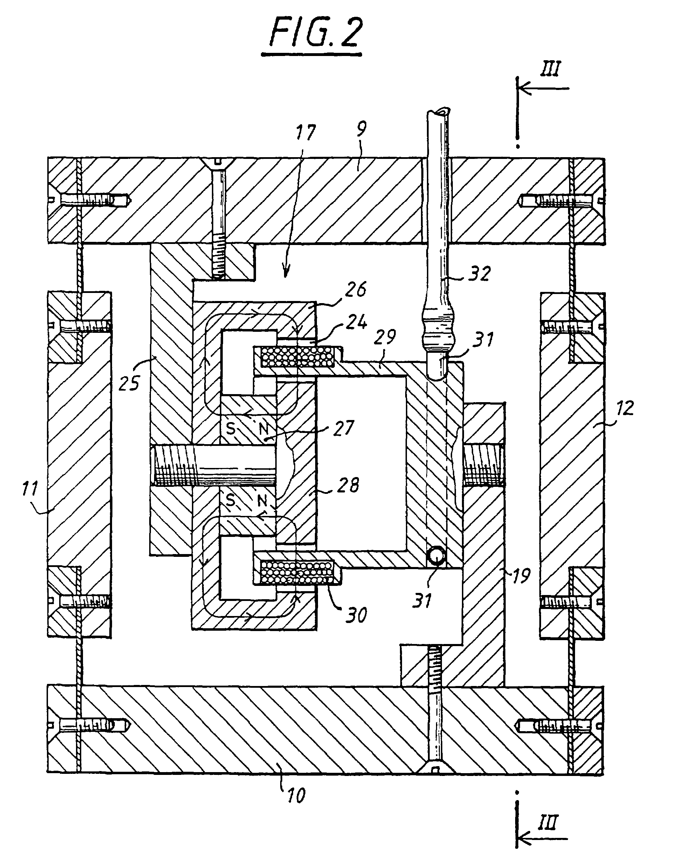

In Figur 2 ist die X-Parallelogrammführung mit dem zugehörigen Meßkraftgenerator im Schnitt detaillierter dargestellt. Der mittels eines Verbindungsteils (25) an die Platte (9) angesetzte feststehende Teil (17) des Meßkraftgenerators besteht aus einem topfartigen Weicheisenteil (26), in den zentrisch ein zylinderförmiger Permanentmagnet (27) mit einem zweiten Weicheisenteil (28) eingesetzt ist. Hierdurch entsteht ein symmetrisch von den Feldlinien des Magneten (27) durchflossener Ringspalt, in den ein ebenfalls topfförmiger Spulenkörper eingesetzt ist. Der Spulenkörper (29) ist über das Verbindungselement (19) mit der beweglichen Platte (10) der x-Führung verbunden. Der Spulenkörper (29) besteht auch im Bereich des Ringspaltes, wo er die Windungen (30) der Tauchspule trägt, aus einem gut wärmeleitenden und elektrisch leitenden Material wie beispielsweise Kupfer. Das hat zwei Vorteile: zum einen gestattet es, auf relativ einfache Weise mittels eines in eine Ringnut des Spulenkörpers (29) eingelöteten Kühlrohres (31) die in der Spule (30) entstehende Wärme durch Flüssigkeitskühlung abzuführen. Hierzu ist das Kühlrohr (31) über einen möglichst flexiblen Schlauch (32) mit einem außerhalb des Tastkopfes, beispielsweise am oberen Ende der Pinole des Koordinatenmeßgeräts angeordneten Wärmetauscher verbunden. Zum anderen wirkt der kupferne Spulenkörper (29) als Wirbelstrombremse und dämpft somit die Bewegungen der Platte (10) relativ zur Platte (9) der Parallelogrammführung.

Um einen möglichst guten Wärmetransport zu gewährleisten sind die Windungen der Spule (30) mittels Wärmeleitpaste in den Spulenkörper (29) eingebettet.

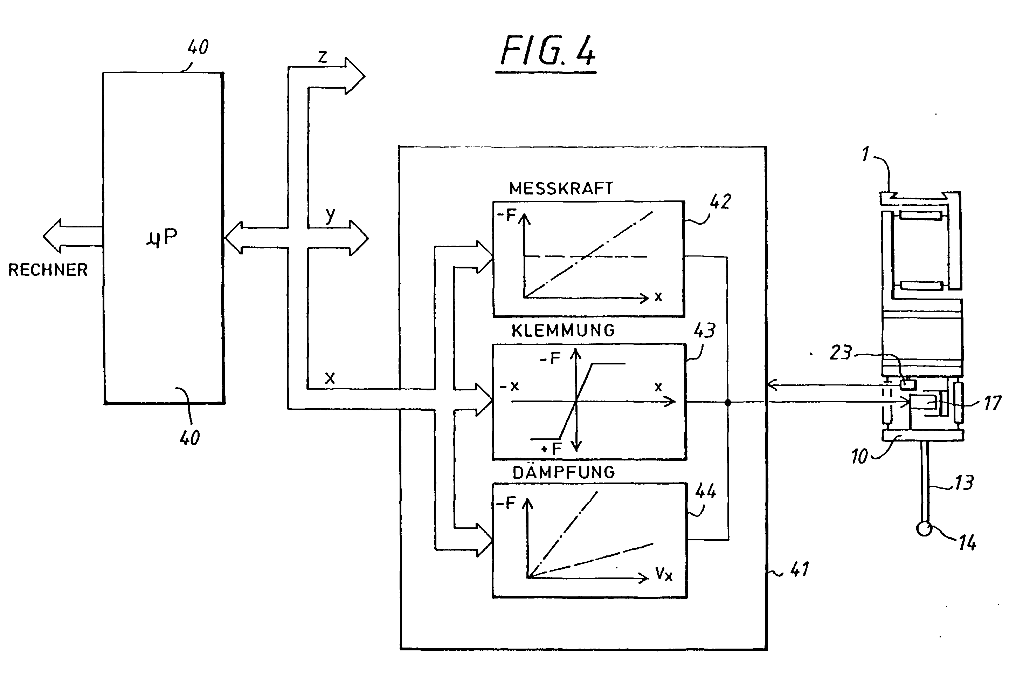

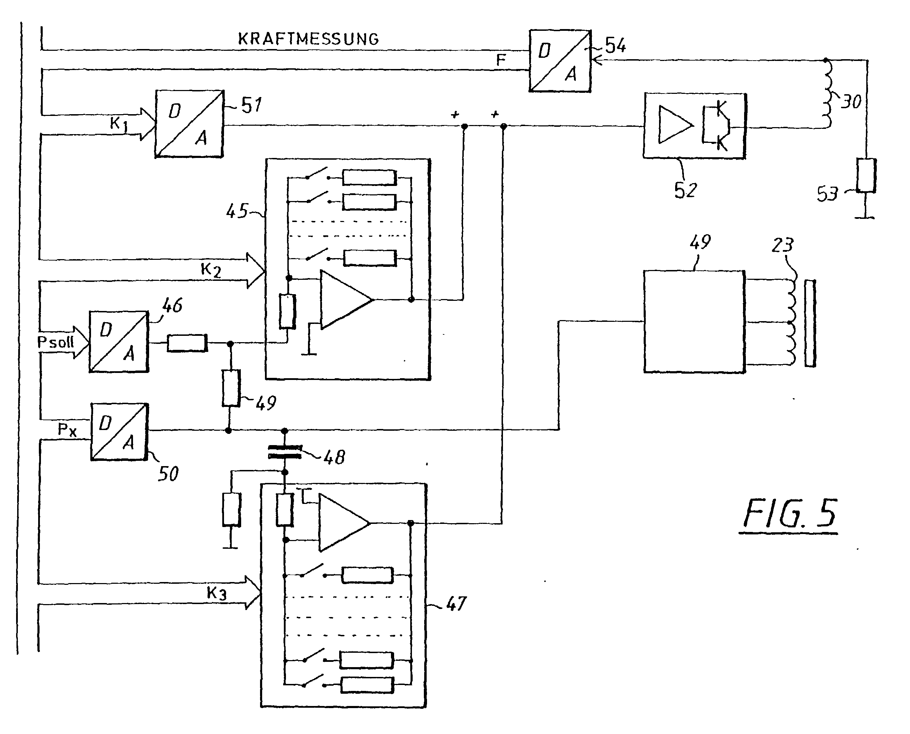

Im beschriebenen Ausführungsbeispiel sind die drei Meßkraftgeneratoren (15,16 und 17) direkt in die drei Führungssysteme für die Koordinaten z, y und x integriert und übernehmen gleichzeitig neben der Erzeugung der gewünschten Meßkraft, die letztendlich von der Tastkugel (14) auf das zu vermessende Werkstück ausgeübt wird, die "Klemmung" der Führungssysteme in vorgegebenen Richtungen und zwar in beliebigen Richtungen, die nicht notwendigerweise mit den Führungsrichtungen x, y und z zusammenfallen. Darüberhinaus kann mit Hilfe der als Tauchspulen ausgebildeten Meßkraftgeneratoren zusätzlich zu der passiven Dämpfung nach dem vorstehend genannten Prinzip der Wirbelstrombremse wie noch beschrieben wird eine aktive geschwindigkeitsproportionale Dämpfung aufgeschaltet werden, wobei das Dämpfungsverhalten gezielt einstellbar ist. Ermöglicht wird all dies durch die in den Figuren 4 und 5 beschriebene mikroprozessorgesteuerte elektronische Regelschaltung.

Wie aus der vereinfachten Prinzipsskizze nach Figur 4 hervorgeht besteht das System aus einem Mikroprozessor (40), der über einen Datenbus mit dem hier nicht dargestellten Rechner des Koordinatenmeßgerätes kommuniziert. Der Mikroprozessor (40) seinerseits steuert drei im wesentlichen identische elektronische Schaltungen, von denen eine, die Schaltung (41), zur Ansteuerung des Meßkraftgenerators (17) für die x-Führung dargestellt ist. Gleichzeitig erhält der Mikroprozessor (40) über die Schaltung (41) ein die Stellung bzw. momentane Auslenkung des Führungssystems x charakterisierendes Signal, d.h. das Ausgangssignal des Meßwertgebers (23) zugeführt. Hierzu ist, wie aus Figur 5 hervorgeht, der an einen Trägerfrequenzmeßverstärker (49) angeschlossene Meßwertgeber (23) über einen Analog/Digitalwandler (50) mit einem Dateneingang des Mikroprozessors verbunden.

Die Schaltung (41) erhält drei Komponenten (42,43 und 44), über die sich jeweils die vom Meßkraftgenerator (17) erzeugte Meßkraft gegebenenfalls in Verbindung mit der Funktion Dämpfung sowie auch die Klemmung des Systems einstellen läßt.

Für die Einstellung der Meßkraft existieren zwei unterschiedliche und auch alternativ nutzbare Möglichkeiten: zum einen kann eine Meßkraft konstanter Größe, unabhängig von der Auslenkung der betreffenden Führung erzeugt werden. Das ist durch die waagerechte gestrichelte Linie im Block (42) in Figur 4 verdeutlicht. Zum anderen besteht die Möglichkeit, eine der Auslenkung proportionale aber entgegengerichtete Meßkraft zu erzeugen, d.h. die Kennlinie einer idealen Feder elektronisch nachzubilden. Das ist durch die strichpunktierte Kennlinie im Block (42) von Figur 4 verdeutlicht.

Die elektronische Klemmung erfolgt durch Aufschaltung einer sehr starken, der Auslenkung entgegenwirkenden Meßkraft, was einer Federkennlinie mit sehr hoher Steilheit entspricht, wobei diese Kennlinie dann bei Erreichen des durch die Spulen des Meßkraftgenerators (17) maximal fließenden Stromes begrenzt wird.

Die Dämpfungscharakteristik wird erzeugt durch Aufschalten einer der Geschwindigkeit der Auslenkung des Führungssystems proportionalen Gegenkraft, wobei sich die Stärke der Dämpfung über den Proportionalitätsfaktor einstellen läßt.

Somit gehorcht das Regelverhalten der Schaltung (41) im wesentlichen folgender mathematischen Funktion:

$$F_x = K1 - K2 \cdot P_x - K3 \cdot dP_x/dt. \tag{1}$$

Hierin beschreibt K1 die Größe der konstanten, auslenkungsunabhängigen Meßkraft, K2 die Proportionalitätskonstante der auslenkungsproportionalen Gegenkraft bei der Klemmung bzw. Meßkrafterzeugung durch nachbilden einer Federkennlinie und K3 die Stärke der geschwindigkeitsproportionalen Dämpfung.

Zur Ansteuerung der Meßkraftgeneratoren entsprechend der Gleichung (1) dient die in Figur 5 dargestellte Regelschaltung. Dort werden die konstanten K1, K2 und K3 von entsprechenden Datenleitungen bzw. Digitalausgängen des Mikroprozessors (40) als Digitalinformation zur Verfügung gestellt. Die Konstante K1, die den Wert der auslenkungsunabhängigen Meßkraft beschreibt, wird von einem Digital/Analogwandler (51) in ein analoges Signal umgewandelt und dem Stromverstärker (52) zugeführt, dessen Ausgang mit der Tauchspule (30) des Meßkraftgenerators (17) verbunden ist. Da eine entsprechende Schaltung für alle drei Meßkraftgeneratoren (15,16 und 17) vorgesehen ist, läßt sich durch entsprechende vektorielle Ansteuerung die Richtung der Meßkraft gezielt vorgeben. Der Spannungsabfall am Meßwiderstand (53) im Stromkreis der Spule (30) des Meßkraftgenerators (17) wird einem Analog/Digitalwandler (54) zugeführt und gelangt als digitale Information an einen Dateneingang des Mikroprozessors. Somit kann die Information über die tatsächlich aufgebrachte Meßkraft vom Mikroprozessor (40) bzw. dem Rechner des Koordinatenmeßgerätes weiterverarbeitet werden, beispielsweise zur Korrektur der von der Meßkraft abhängigen Biegungen des Taststifts (13) oder anderer elastischer Komponenten des Koordinatenmeßgeräts.

Zur Einstellung der geschwindigkeitsabhängigen Dämpfung wird das vom Trägerfrequenzmeßverstärker (49) gelieferte Positionsmeßsignal $P_x$ über einen Hochpaß (48) einen programmierbaren Verstärker (47) zugeführt. Dessen Verstärkungsfaktor ist entsprechend der Konstante K3 einstellbar. Auf diese Weise läßt sich die Steilheit der Regelkennlinie $F(v_x)$ einstellen. Der Ausgang des programmierbaren Verstärkers (47) ist ebenfalls an den Eingang des Stromverstärkers (52) für den Meßkraftgenerator (17) gelegt.

Zur Einstellung von Klemmkraft und Klemmrichtung ist ein zweiter programmierbarer Verstärker (45) vorgesehen. Die Stärke der Klemmung, d.h. die Steilheit der Kennlinie des Reglers wird durch die Konstante K2 bestimmt, die den Verstärkungsfaktor des programmierbaren Verstärkers (45) einstellt. Da jedoch außerdem die Richtung der Klemmkraft vektoriell vorgegeben werden soll, wird ein entsprechend berechnetes digitales Signal $P_{Soll}$, das von einem Digitalausgang des Mikroprozessors (40) zur Verfügung gestellt wird, von einem Digital/Analogwandler (46) in ein Analogsignal gewandelt und dem Eingang des programmierbaren Verstärkers (45) zugeführt. Dessen Ausgang ist wieder an den Eingang des Stromverstärkers (52) angeschlossen. Gleichzeitig ist auch der Ausgang des Trägerfrequenzmeßverstärkers (49) mit dem Eingang des programmierbaren Verstärkers (45) verbunden, der somit ein der Auslenkung des Taststifts (13) entgegengerichtetes Signal erhält, das vom Verstärker (45) sehr hoch verstärkt wird.

Zur Einstellung der Richtung der Gegenkraft berechnet der Mikroprozessor (40) aus der vom Analog/Digitalwandler (50) erhaltenen Information über den aktuellen Istwert $P_x$ der Auslenkung den Vorgabewert $P_{Soll}$ für den Verstärker (45). Letzteres läuft folgendermaßen ab: soll der Taststift (13) in der x-Richtung geklemmt werden, so wird $P_{Soll}$ zu null gesetzt und jede versuchte Verlagerung aus diesem Nullpunkt erzeugt über die über den Widerstand (49) führende analoge Regelschleife eine sehr hohe auslenkungsabhängige Gegenkraft. Soll die x-Achse dagegen entklemmt werden, so wird $P_{Soll}$ laufend auf den Wert von $-P_x$ gesetzt. Die am Eingang des Verstärkers (45) aufsummierten Beiträge von $P_{Soll}$ und $P_x$ kompensieren sich dann gegenseitig, so daß die x-Führung ausgelenkt werden kann, ohne daß der Verstärker (45) "gegensteuert". Die Drehung der Klemmkraft in der Ebene x/y beispielsweise erfolgt dadurch, daß die Werte von $P_{Soll}$ für die x und y-Richtung in das entsprechende Verhältnis gesetzt werden, das der Normalen $\vec{N}_K$ zum Richtungsvektor $\vec{E}_K$ der Klemmkraft entspricht. Es gilt dann:

$$\vec{P}_{Soll} = \sqrt{P_x{}^2 + P_y{}^2} \cdot \vec{N}_K \quad \text{und} \quad \vec{N}_K \perp \vec{E}_K \qquad (2)$$

Im vorstehenden Ausführungsbeispiel sind die Meßkraftgeneratoren (15-17) als Tauchspulensysteme ausgeführt. Es ist jedoch auch möglich, die Tauchspulen durch andere elektromagnetische Antriebe wie beispielsweise Linearmotoren etc. zu ersetzen.

**Patentansprüche**

1.　Tastkopf für Koordinatenmeßgeräte mit Meßsystemen (21-23) zur Messung der Auslenkung des nachgiebigen Teils des Tastkopfes, elektromagnetischen Kraftgeneratoren (15-17) zur Erzeugung von Meßkräften vorgebbarer Größe und Richtung sowie eine Einrichtung zum Fesseln bzw. Klemmen des nachgiebigen Teils in vorgebbaren Richtungen, wobei

- der nachgiebige Teil (10) des Tastkopfes über ein Führungssystem in verschiedenen Richtungen auslenkbar ist und die Kraftgeneratoren direkt an den Führungen für die verschiedenen Richtungen (x,y,z) angeordnet sind
- die Einrichtung zum Fesseln bzw. Klemmen eine elektronische Regelschaltung (43) umfaßt, die ein der Auslenkung des nachgiebigen Teils entgegengerichtetes Signal auf die Kraftgeneratoren aufschaltet, und
- der Tastkopf eine oder mehrere elektromagnetische Dämpfungseinrichtungen (29,44) für den nachgiebigen Teil enthält,

dadurch gekennzeichnet, daß die elektromagnetische Dämpfungseinrichtung nach dem Prinzip der Wirbelstrombremse arbeitet.

2.　Tastkopf nach Anspruch 1, wobei die Kraftgeneratoren (15-17) Tauchspulen sind, deren Spulenkörper (29) aus Metall bestehen.

3.　Tastkopf nach einem der Ansprüche 1-2, wobei die Tauchspulen an eine Kühleinrichtung (31,32) angeschlossen sind.

4. Tastkopf nach einem der Ansprüche 2 oder 3, wobei die Spulen (30) oder der Spulenkörper (29) mit Röhren (31) für eine Kühlflüssigkeit verbunden sind.

5. Tastkopf nach einem der Ansprüche 1-4, wobei die elektromagnetische Dämpfungseinrichtung eine elektronische Regelschaltung (44) umfaßt, die ein der Geschwindigkeit der Auslenkung des nachgiebigen Teils proportionales, der Auslenkrichtung entgegengerichtetes Signal auf die Kraftgeneratoren (15-17) aufschaltet.

6. Tastkopf nach Anspruch 5, wobei die Dämpfungscharakteristik der Dämpfungseinrichtung (44) prozessorgesteuert einstellbar ist.

7. Tastkopf nach einem der Ansprüche 1-6, wobei die Regelverstärkung der elektrischen Regelschaltung (43) zum Fesseln bzw. Klemmen prozessorgesteuert einstellbar ist.

8. Tastkopf nach einem der Ansprüche 1-7, wobei zur Vorgabe der Meßkräfte in den einzelnen Koordinatenrichtungen (x,y,z), zur Einstellung der Klemmkräfte in den vorgebbaren Richtungen und zur Erzeugung der geschwindigkeitsabhängigen Dämpfung ein Mikroprozessor (40) dient, an dessen Ausgänge über entsprechende Treiberschaltungen die Kraftgeneratoren (15-17) angeschlossen sind, und der über eine Datenleitung mit dem Steuerrechner des Koordinatenmeßgeräts verbunden ist.

9. Tastkopf nach einem der Ansprüche 1-8, wobei die Regelsignale für die Einstellung der Meß- und Klemmkräfte und der Dämpfung von den im Tastkopf vorhanden Meßsystemen (21-23) abgeleitet sind, die jeweils ein der Auslenkung des nachgiebigen Teils (10) in der jeweiligen Koordinatenrichtung proportionales Tastsignal liefern.

**Claims**

1. Probe for coordinate measuring instruments having measuring systems (21-23) for measuring the deflection of the flexible part of the probe, electromagnetic force generators (15-17) for generating measuring forces of prescribable magnitude and direction, and a device for holding or clamping the flexible part in prescribable directions,

   - it being possible to deflect the flexible part (10) of the probe in different direction via a guide system, and the force generators being arranged directly on the guides for the different directions (x, y, z),
   - the device for holding or clamping comprising an electronic control circuit (43) which applies to the force generators a signal directed opposite to the deflection of the flexible part, and
   - the probe including one or more electromagnetic damping devices (29, 44) for the flexible part,

   characterized in that the electromagnetic damping device operates according to the principle of the eddy-current brake.

2. Probe according to Claim 1, in which the force generators (15-17) are plunger coils whose coil formers (29) consist of metal.

3. Probe according to one of Claims 1-2, in which the plunger coils are connected to a cooling device (31, 32).

4. Probe according to one of Claims 2 or 3, in which the coils (30) or the coil formers (29) are connected to tubes (31) for a cooling liquid.

5. Probe according to one of Claims 1-4, in which the electromagnetic damping device comprises an electronic control circuit (44) which applies to the force generators (15-17) a signal which is proportional to the speed of deflection of the flexible part and is directed opposite to the deflection direction.

6. Probe according to Claim 5, in which the damping characteristic of the damping device (44) can be set under processor control.

7. Probe according to one of Claims 1-6, in which the controller gain of the electric control circuit (43) can be set to hold or to clamp under processor control.

**8.** Probe according to one of Claims 1-7, in which serving the purpose of prescribing the measuring forces in the individual coordinate directions (x, y, z), of setting the clamping forces in the prescribable directions and of producing the speed-dependent damping is a microprocessor (40) to whose outputs the force generators (15-17) are connected via corresponding drive circuits, and which is connected via a data line to the control computer of the coordinate measuring instrument.

**9.** Probe according to one of Claims 1-8, in which the control signals for setting the measuring and clamping forces and the damping are derived from the measuring systems (21-23) present in the probe, which in each case supply a probe signal proportional to the deflection of the flexible part (10) in the respective coordinate direction.


**Revendications**

**1.** Tête de palpage pour les appareils de mesure de coordonnées comprenant des systèmes de mesure (21-23) pour mesurer la déviation de la partie flexible de la tête de palpage, des générateurs de force électromagnétiques (15-17) pour générer des forces de mesure d'intensité et de direction prédéfinies ainsi qu'un dispositif pour bloquer ou caler la partie flexible dans une direction prédéfinie, dans laquelle

- la partie flexible (10) de la tête de palpage peut être orientée dans différentes directions par le biais d'un système de guidage et les générateurs de force sont disposés directement au niveau des guides pour les différentes directions (x, y, z),
- le dispositif de blocage ou de calage comprend un circuit électronique de régulation (43) qui envoie un signal en sens inverse de la déviation de la partie flexible vers les générateurs de force, et
- la tête de palpage comprend un ou plusieurs dispositifs d'amortissement électromagnétiques (29, 44) pour la partie flexible,

caractérisée en ce que le dispositif d'amortissement électromagnétique fonctionne selon le principe d'un frein à courants de Foucault.

**2.** Tête de palpage selon la revendication 1, dans laquelle les générateurs de force (15-17) sont des bobines mobiles dont les corps de bobine (29) sont en métal.

**3.** Tête de palpage selon l'une des revendications 1-2, dans laquelle les bobines mobiles sont raccordées à un dispositif de refroidissement (31, 32).

**4.** Tête de palpage selon l'une des revendications 2 ou 3, dans laquelle les bobines (30) ou les corps de bobine (29) sont reliés à des tubes (31) pour un liquide de refroidissement.

**5.** Tête de palpage selon l'une des revendications 1-4, dans laquelle le dispositif d'amortissement électromagnétique comprend un circuit électronique de régulation (44) qui envoie un signal en sens inverse de la déviation de la partie flexible et proportionnel à la vitesse de déviation de la partie flexible vers les générateurs de force (15-17).

**6.** Tête de palpage selon la revendication 5, dans laquelle la caractéristique d'amortissement du dispositif d'amortissement (44) peut être réglée par une commande à microprocesseur.

**7.** Tête de palpage selon l'une des revendications 1-6, dans laquelle l'amplification de régulation du circuit électrique de régulation (43) peut être réglée par une commande à microprocesseur pour le blocage ou le calage.

**8.** Tête de palpage selon l'une des revendications 1-7, dans laquelle un microprocesseur (40) sert à prédéfinir les forces de mesure dans chacune des directions des coordonnées (x, y, z), à régler les forces de calage dans les directions prédéfinissables et à générer l'amortissement en fonction de la vitesse, microprocesseur (40) aux sorties duquel sont raccordés les générateurs de force (15-17) par le biais de circuits pilotes correspondants et qui est relié à l'ordinateur de commande de l'appareil de mesure de coordonnées par le biais d'une ligne de données.

**9.** Tête de palpage selon l'une des revendications 1-8, dans laquelle les signaux de régulation pour le réglage des forces de mesure et de calage ainsi que l'amortissement sont dérivés des systèmes de mesure (21-23) présents dans la tête de palpage, lesquels délivrent chacun un signal de palpage proportionnel à la déviation de la partie flexible (10) dans la direction correspondante des coordonnés.

_FIG. 1_

# FIG.2

# FIG. 3

FIG.4

MESSKRAFT

KLEMMUNG

DÄMPFUNG

RECHNER

EP 0 693 669 B1

KRAFTMESSUNG

FIG.5